# EUROPÄISCHE PATENTANMELDUNG

(11) **EP 0 798 885 A2**
(43) Veröffentlichungstag der Anmeldung: **01.10.1997**
(21) Anmeldenummer: 97103871.6
(22) Anmeldetag: 07.03.1997
(51) Int. Cl.: H04B 15/00

(54) **Schaltungsanordnung zur Kopplung eines analogen Übertragungswegs mit einem digitalen Übertragungsweg**

(30) Priorität: 26.03.1996 DE 19611948
(71) Anmelder: SIEMENS AKTIENGESELLSCHAFT, 80333 München (DE)
(72) Erfinder: Dielacher, Franz, 9500 Villach (AT); Caldera, Peter, 9500 Villach (AT); Hauptmann, Jörg, 9500 Villach (AT)

(57) **Zusammenfassung**

Schaltungsanordnung zur Kopplung eines analogen Übertragungswegs (1) und eines digitalen Übertragungswegs (2), bei der zwischen die Übertragungswege (1, 2) eine Umsetzeinrichtung (3) zum Umsetzen digitaler Signale in analoge Signale und umgekehrt sowie eine Entkopplungseinrichtung (4) zur galvanischen Trennung der beiden Übertragungswege (1, 2) voneinander geschaltet sind, wobei die Kopplungsmittel (4) einerseits mit dem digitalen (d) Übertragungsweg (2) verbunden ist und andererseits unter Zwischenschaltung der Umsetzeinrichtung (3) an dem analogen (a) Übertragungsweg (1) angeschlossen sind.

## Beschreibung

Die Erfindung betrifft eine Schaltungsanordnung zur Kopplung eines analogen Übertragungswegs mit einem digitalen Übertragungsweg, bei der eine Umsetzeinrichtung zum Umsetzen digitaler Signale in analoge Signale und umgekehrt sowie Kopplungsmittel zur galvanischen Trennung zwischen die Übertragungswege geschaltet ist.

Derartige Schaltungsanordnungen sind beispielsweise aus den europäischen Patentschriften 0 448 753 und 0 448 754 bekannt. Die Umsetzeinrichtung ist dabei mit dem digitalen Übertragungsweg direkt verbunden und mit dem analogen Übertragungsweg unter Zwischenschaltung der Kopplungsmittel zur galvanischen Trennung mit dem analogen Übertragungsweg gekoppelt. Insbesondere beim Einsatz in Telefonanlagen werden bei den bekannten Schaltungsanordnungen hohe Ansprüche an die Übertragungsqualität der Kopplungsmittel gestellt, damit die analogen Signale möglichst unverändert vom analogen Übertragungsweg zur Umsetzeinrichtung und umgekehrt übertragen werden. Um den Anforderungen insbesondere hinsichtlich Linearität und Bandbreite gerecht zu werden, ist ein gewisser Aufwand notwendig. Bevorzugt werden daher induktive Übertrager verwendet, die neben der geforderten galvanischen Trennung eine gute Linearität sowie geringe Verluste aufweisen. Dem stehen jedoch ein relativ hohes Eigengewicht, große räumliche Abmessungen sowie ein großer Herstellungsaufwand gegenüber. Kopplungsmittel mit kleineren Abmessungen wie beispielsweise Optokoppler haben dagegen eine höhere Verlustleistung und erbringen nur durch zusätzliche Maßnahmen die geforderte Linearität. Kondensatoren schließlich müssen eine bestimmte Kapazität aufweisen, um die geforderte Linearität und Bandbreite zu gewährleisten. Mit steigender Kapazität nehmen jedoch die räumlichen Abmessungen des Kondensators zu.

Aufgabe der Erfindung ist es, eine Schaltungsanordnung der eingangs genannten Art anzugeben, bei der geringere Anforderungen an die Kopplungsmittel zu stellen sind.

Die Aufgabe wird durch eine Schaltungsanordnung gemäß Patentanspruch 1 gelöst. Ausgestaltungen und Weiterbildungen des Erfindungsgedankens sind Gegenstand von Unteransprüchen.

Bei der erfindungsgemäßen Schaltungsanordnung werden die Anforderungen an die Kopplungsmittel dadurch verringert, daß diese in den digitalen Signalzweig gesetzt werden. Gegenüber der Übertragung analoger Signale spielen die Übertragungseigenschaften der Kopplungsmittel eine wesentlich geringere Rolle, so daß sowohl eine geringere, als auch eine schwankende Übertragungsqualität der Kopplungsmittel ohne nennenswerten Einfluß auf die Signalübertragung bleibt. Darüber hinaus können durch die Kopplungsmittel verfälschte digitale Signale in wesentlich stärkerem Maße rekonstruiert werden als analoge Signale. Im einzelnen werden folglich bei einer Schaltungsanordnung zur Kopplung eines analogen Übertragungswegs und eines digitalen Übertragungswegs die Kopplungsmittel mit dem digitalen Übertragungsweg direkt und mit dem analogen Übertragungsweg unter Zwischenschaltung der Umsetzeinrichtung gekoppelt, so daß über die Kopplungsmittel nur digitale Signale geführt werden.

Bei einer Ausgestaltung der Erfindung wird der analoge Übertragungsweg als ein Sende- und Empfangssignale führender analoger Zweidraht-Übertragungsweg ausgebildet. Der digitale Übertragungsweg umfaßt einen Sendesignale führenden digitalen Zweidraht-Übertragungsweg und einen Empfangssignale führenden digitalen Zweidrahtweg. Eine Gabelschaltung zur Zweidraht-Vierdraht-Umsetzung ist zwischen die drei Zweidraht-Übertragungswege geschaltet.

Als Kopplungsmittel mit galvanischer Trennung werden bevorzugt Kondensatoren und/oder Optokoppler verwendet. Kondensatoren zeichnen sich vor allem durch einen geringere Energieaufwand und Optokoppler durch eine hohe Isolierspannung aus.

Neben der Übertragung von Daten oder Sprache können auch zusätzlich Steuersignale zwischen analogem und digitalem Übertragungsweg ausgetauscht werden.

Weiterbildungen der Erfindung sehen vor, daß die Gabelschaltung und/oder die Umsetzeinrichtung aus dem analogen Übertragungsweg gespeist wird. Dies hat den Vorteil, daß für die Speisung von Gabelschaltung und/oder Umsetzeinrichtung keine zusätzlichen Versorgungseinrichtungen erforderlich sind.

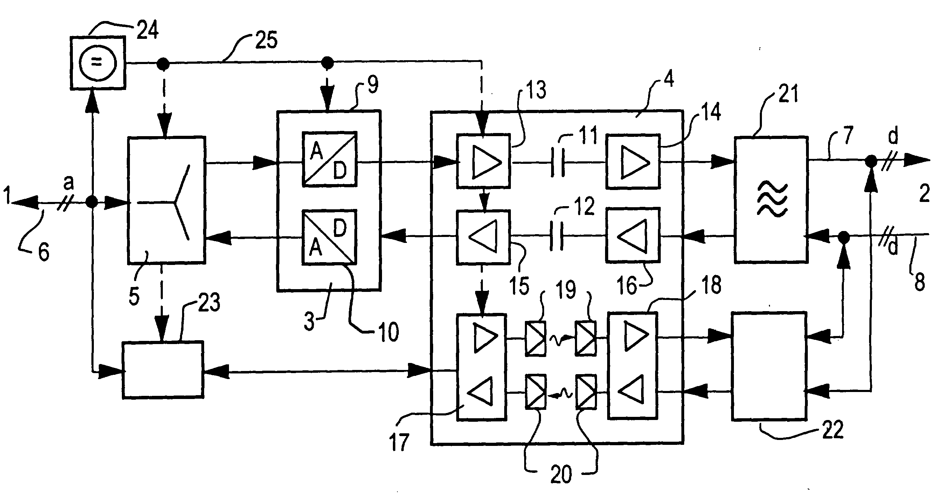

Die Erfindung wird nachfolgend anhand des in der einzigen Figur der Zeichnung dargestellten Ausführungsbeispiels näher erläutert.

Bei dem Ausführungsbeispiel werden ein analoger Übertragungsweg 1 mit einem digitalen Übertragungsweg 2 mittels einer erfindungsgemäßen Schaltungsanordnung gekoppelt. Die Umsetzung von analogen Signalen a in digitale Signale d und umgekehrt erfolgt dabei mittels einer Umsetzeinrichtung 3, die einen Analog-Digital-Wandler 9 sowie einen Digital-Analog-Wandler 10 aufweist. Der Analog-Digital-Wandler 9 erhält dabei Signale von dem analogen Übertragungsweg 1 und der Digital-Analog-Wandler 10 stellt Signale bereit, die über den analogen Übertragungsweg 1 übertragen werden sollen. Eine Gabelschaltung 5 spaltet dabei auf dem analogen Übertragungsweg 1 bidirektional übertragene Signale in Empfangssignale, die dem Analog-Digital-Wandler 9 zugeführt werden, und in Sendesignale, die vom Digital-Analog-Wandler 10 stammen, auf. Der analoge (a) Übertragungsweg 1 ist dabei insbesondere als Zweidraht-Übertragungsweg 6 ausgeführt.

Zwischen die Umsetzeinrichtung 3 und den digitalen Übertragungsweg 2, der seinerseits einem digitalen Zweidraht-Übertragungsweg 7 in Senderichtung und einem digitalen Zweidraht-Übertragungsweg 8 in Empfangsrichtung besteht, sind Kopplungsmittel 4 zur galvanischen Trennung von analogem Übertragungsweg 1 und digitalem Übertragungsweg 2 geschaltet. Die galvanisch getrennte Kopplung von analogem Übertragungsweg 1 und digitalem Übertragungsweg 2 erfolgt dabei kapazitiv mittels der Kondensatoren 11 und 12, wobei der Kondensator 11 digitale Signale in Richtung des digitalen Übertragungswegs 2 und der Kondensator 12 digitale Signale vom digitalen Übertragungsweg 2 überträgt. Zum Betreiben der Kondensatoren 11 und 12 sind jeweils entsprechende Sendeeinrichtungen 13 bzw. 16 und Empfangseinrichtungen 14 bzw. 15 vorgesehen. Die Sendeeinrichtungen 13 und 16 bereiten dabei die zu sendenden Signale entsprechend auf und die Empfangseinrichtungen 14 und 15 erzeugen aus den empfangenen Signalen wiederum die entsprechenden digitalen Signale.

Schließlich ist zwischen die Kopplungsmittel 4 und digitalem Übertragungsweg 2 ein digitales Filter 21 als Leitungsabschluß und/oder Balancefilter für den analogen Übertragungsweg 1 geschaltet. In gleicher Weise könnte das Filter 21 auch analog realisiert und zwischen analogem Übertragungsweg 1 und den Kopplungsmittel 4 installiert werden. Jedoch ist die digitale Realisierung demgegenüber wesentlich einfacher zu realisieren und zudem wird der Versorgungsstrombedarf auf der analogen Seite verringert.

Darüber hinaus können weitere Kopplungselemente bei der Kopplungsmitteln 4 vorgesehen werden, die beispielsweise zur Übertragung von Signalisierungsinformationen dienen. Die galvanisch getrennte Kopplung erfolgt beim Ausführungsbeispiel auf optoelektronischem Wege. Dazu ist ein bidirektionaler Optokoppler 17, 18, 19, 20, vorgesehen, der zwei Lichtsender-Lichtempfänger-Paare 19, 20 aufweist. Die Lichtsender-Lichtempfänger-Paare 19, 20 werden dabei jeweils mittels entsprechender Sende- und Empfangseinrichtungen 17 bzw. 18 zur Signalaufbereitung und Signalauswertung betrieben. Ein zu übertragendes Signalisierungssignal wird auf analoger Seite beispielsweise durch eine Ein-/Ausgabeeinheit 23 an dem Zweidraht-Übertragungsweg 6 abgenommen und der Sende-Empfangs-Einrichtung 17 zugeführt, die diese Information über das Lichtsender-Lichtempfänger-Paar 19 unter Zwischenschaltung der Sende-Empfangs-Einrichtung 18 an eine Kontrolleinrichtung 22 weitergibt. Umgekehrt werden Signale von der Kontrolleinrichtung 22 über die Sende-Empfangs-Einrichtung 18, das Lichtsender-Lichtempfänger-Paar 20, die Sende-Empfangs-Einrichtung 17 und schließlich über die Ein-/Ausgabeeinheit 23 auf den Zweidraht-Übertragungsweg 6 gegeben. Die Kontrolleinrichtung 22 ist mit den digitalen Zweidraht-Übertragungswegen 7 und 8 zum Zwecke des Datenaustausches gekoppelt.

Bevorzugt werden, wie beim Ausführungsbeispiel gezeigt, sämtliche analogseitigen Schaltungsteile über den analogen Übertragungsweg 1 gespeist. Eine Spannungsregeleinrichtung 24 erzeugt aus einer an dem Zweidraht-Übertragungsweg 6 anliegenden Spannung eine Versorgungsspannung 25, die beispielsweise der Gabelschaltung 5, der Analog-Digital-Umsetzeinrichtung 3, der Ein-/Ausgabe-Einheit 23 der Sende-/Empfangs-Einrichtung 17 sowie der Sende-Einrichtung 13 und der Empfangs-Einrichtung 15 bereitgestellt wird. Vorteil dabei ist, daß für die analogseitigen Schaltungsteile keine eigene, von der Digitalseite galvanisch getrennte Versorgungsspannung bereitgestellt werden muß.

Neben den gezeigten Kopplungsarten mittels Kondensatoren und Optokopplern können darüber hinaus in beliebiger Weise auch andere Kopplungen mit galvanischer Trennung wie beispielsweise induktive Kopplung etc. eingesetzt werden. Auch können in Anpassung an das jeweilige Übertragungssystem entsprechende Schaltungsteile auf analoger und/oder digitaler Seite hinzukommen und/oder entfallen.

## Patentansprüche

1. Schaltungsanordnung zur Kopplung eines analogen (a) Übertragungswegs (1) und eines digitalen (d) Übertragungswegs (2), bei der zwischen die Übertragungswege (1, 2) eine Umsetzeinrichtung (3) zum Umsetzen digitaler Signale in analoge Signale und umgekehrt sowie Kopplungsmittel (4) zur galvanischen Trennung der beiden Übertragungswege (1, 2) voneinander,
**dadurch gekennzeichnet,** daß die Kopplungsmittel (4) einerseits mit dem digitalen (d) Übertragungsweg (2) verbunden und andererseits unter Zwischenschaltung der Umsetzeinrichtung (3) an dem analogen (a) Übertragungsweg (1) angeschlossen sind.

2. Schaltungsanordnung nach Anspruch 1,
**dadurch gekennzeichnet,** daß der analoge Übertragungsweg (1) ein Sende- und Empfangssignale führender Zweidraht-Übertragungsweg (6) ist,
daß der digitale Übertragungsweg (2) einen Sendesignale führenden Zweidraht-Übertragungsweg (7) und einen Empfangssignale führenden Zweidraht-Übertragungsweg (8) umfaßt, und
daß eine Gabelschaltung (5) mit den drei Zweidraht-Übertragungswegen (6, 7, 8) gekoppelt ist.

3. Schaltungsanordnung nach einem der vorherigen Ansprüche,
**dadurch gekennzeichnet,** daß die Kopplungsmittel (4) mindestens einen Kondensator (11, 12) zur galvanischen Trennung aufweisen.

4. Übertragungssystem nach einem der vorherigen Ansprüche,
**dadurch gekennzeichnet,** daß die Kopplungsmittel (4) mindestens einen Optokoppler (17, 18, 19, 20) zur galvanischen Trennung aufweisen.

5. Übertragungssystem nach einem der vorherigen Ansprüche,
**dadurch gekennzeichnet,** daß über die Kopplungsmittel (4) auch Steuersignale zwischen analogem und digitalem Übertragungsweg (1, 2) ausgetauscht werden.

6. Übertragungssystem nach einem der vorherigen Ansprüche,
**dadurch gekennzeichnet,** daß zumindest ein Teil der analogseitigen Schaltungsteile (3, 4, 5, 23) aus dem analogen Übertragungsweg (1) gespeist wird.

7. Schaltungsanordnung nach einem der vorherigen Ansprüche,
**dadurch gekennzeichnet,** daß digitalseitig mindestens ein Filter (21) vorgesehen ist,
daß über die Kopplungsmittel (4) und die Umsetzeinrichtung (3) auf den analogen Übertragungsweg (1) einwirkt.
